# EUROPEAN PATENT SPECIFICATION

(11) **EP 2 883 310 B1**
(45) Date of publication and mention of the grant of the patent: **07.03.2018**
(21) Application number: 13741720.0
(22) Date of filing: 23.07.2013
(51) Int. Cl.: H04B 7/022, H04B 7/0404, H04B 7/06

(54) **DYNAMIC SWITCHING OF THE UPLINK BEAMFORMING WITH THE DOWNLINK MULTIFLOW DATA TRANSMISSION**
DYNAMISCHE UMSCHALTUNG EINER AUFWÄRTSSTRECKEN-STRAHLFORMUNG MIT EINER ABWÄRTSSTRECKEN-MULTIFLOW-DATENÜBERTRAGUNG
COMMUTATION DYNAMIQUE DE LA MISE EN FORME DE FAISCEAU SENS MONTANT AVEC LA TRANSMISSION DE DONNÉES EN MULTIFLUX SENS DESCENDANT

(30) Priority: 10.08.2012 WO PCT/EP2012/065726
(43) Date of publication of application: 17.06.2015
(73) Proprietor: Nokia Solutions and Networks Oy, 02610 Espoo (FI)
(72) Inventor: SAYENKO, Alexander, FIn-02210 Espoo (FI); RANTA-AHO, Karri Markus, FIN-02600 Espoo (FI); WIGARD, Jeroen, DK-9270 Klarup (DK); HOEHNE, Hans Thomas, FIN-00420 Helsinki (FI)
(74) Representative: Nokia EPO representatives
(86) International application number: PCT/EP2013/065459
(87) International publication number: WO 2014/023568

(56) References cited:
- EP-A1- 2 276 305
- US-A1- 2011 176 593
- US-A1- 2012 071 194
- NOKIA SIEMENS NETWORKS ET AL: "HSDPA Multiflow configuration", 3GPP DRAFT; R2-122983_MF_CONFIGURATION_V28B, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 25 May 2012 (2012-05-25), XP050607570, [retrieved on 2012-05-25]
- NOKIA SIEMENS NETWORKS: "Report of email discussion [78#55]", 3GPP DRAFT; R2-123251_MF_REPORT_V03, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20120813 - 20120817 6 August 2012 (2012-08-06), XP050665267, Retrieved from the Internet: URL:http://www.3gpp.org/ftp/tsg_ran/WG2_RL 2/TSGR2_79/Docs/ [retrieved on 2012-08-06]

## Description

### Field of the invention

The present invention relates to an apparatus, a method, a system, and a computer program product related to multiflow. More particularly, the present invention relates to an apparatus, a method, a system, and a computer program product for multiflow in combination with transmit diversity.

### Background of the invention

Abbreviations
- 3GPP: 3^{rd} generation partnership project
- LTE: Long term evolution
- ID: Identity, Identifier
- Rel: Release
- SA: Service Architecture (group)
- TR: Technical report
- TS: Technical Specification
- UE: User equipment
- eNB: evolved NodeB
- RAT: Radio Access Technology
- PDA: Personal Digital Assistant
- CLTD: Closed-loop transmit diversity
- DC-HSDPA: Dual-carrier HSDPA
- HSDPA: High speed downlink packet access
- MC-HSDPA: Multi-carrier HSDPA
- MF: Multiflow
- OLTD: Open-loop transmit diversity
- SF-DC: Single-frequency dual-cell
- TxD: Transmit diversity
- TCP: Transmission Control Protocol
- F-TPICH: Fractional transmitted precoding indicator channel
- BLER: Block Error Rate
- QoS: Quality of Service
- CPICH: Common Pilot Channel
- E-DCH: Enhanced Uplink Dedicated Channel
- DCH: Dedicated Channel
- HARQ: Hybrid Automatic Repeat Request
- HS-DPCCH: High Speed Dedicated Physical Control Channel
- SIR: Signal to Interference Ratio
- CQI: Channel Quality Indicator
- ACK: Acknowledged
- NACK: Not Acknowledged
- RSCP: Received Signal Code Power
- RRC: Radio Resource Control

3GPP Rel-11 is characterized by a number of new features that aim at improving at least one of the downlink and uplink performance. Multiflow (MF) aims at improving the downlink. MF is somewhat similar to the multi-carrier HSDPA, but is characterized by splitting the application level data into several flows and sending each flow from a particular sector that may belong to either the same or different base stations. One or more of the cells are the (assisted) serving cells , the other cells are named assisting (serving) cells. The group of (assisted) serving cells and group of assisting cells are characterized in that the cell timing within one group is the same (just as in multi-carrier), but the timing between the two groups typically will be different. For simplicity and without loss of generality we will in the sequel talk about a system where there is one (assisted) serving cell, short serving cell, and one assisting (serving) cell, short assisting cell. Multiflow does not require coordination of the packet schedulers taking part in the Multiflow transmission, thus simplifying the concept and enabling inter-site deployment. Uncoordinated transmission, however, may lead to situations where a UE receives two flows simultaneously from two base stations. To spatially separate and successfully decode the flows, the terminal must have a minimum of two receive antennas and interference-aware receiver chains.

As for the uplink improvements, Rel-11 has introduced so-called uplink transmit diversity (TxD) where a terminal possessing two transmit antennas can adjust its signals so that they arrive at the base station in a coherent manner. There are also two TxD sub-options: open-loop (OLTD) and closed-loop (CLTD).

Even though both MF and TxD features are completely independent, it is possible to assume the presence and simultaneous operation of both features, e.g. in the high-end chipsets. Indeed, a basic MF functionality, e.g. SF-DC, wherein one carrier frequency is used from both multiflow cells, is based on DC-HSDPA, which is becoming more common even in the mobile phones, not only in the USB dongles. At the same time, TxD aims at improving the uplink performance, which is becoming quite crucial with applications sending content with rich media.

While configuring a UE with the MF operation, network faces a challenge of the link imbalance between two cells. Usually, there is a stronger and a weaker cell. While in the downlink direction that link imbalance is taken into account implicitly by the amount of data scheduled over each multiflow cell based on the CQI reports, it becomes more challenging in uplink where both CQI and HARQ ACK/NACK messages (both fed back to the network by the UE on the same uplink HS-DPCCH channel) should be received reliably to make further decisions on how much to send in downlink. If MF operation is constrained to a small handover area of e.g. 3dB, then the link imbalance (the difference reception level of the HS-DPCCH as observed in the two cells participating in MF operation) will be limited as well, potentially not causing any problems. On the other hand, it has been shown by simulation results that MF gains are getting higher when the area is increased up to 6dB involving more UEs into the MF operation. In this case, the link imbalance gets larger causing also the difference in observed HS-DPCCH level in the two cells getting larger and potentially leading to problems in correct reception of the HS-DPCCH in the cell with weaker link to the UE.

So, a problem is how make the uplink channel reliable also from the viewpoint of the weaker (typically the assisting) Node B.

One of the possible solutions is to utilize the TxD feature, and in particular CLTD, so that a UE steers its transmission signal towards a particular base station. In the absence of TxD, there is no active feedback from the network regarding the signal transmitted by a UE. If TxD feature is applied the way it is specified in 3GPP Rel. 11, then it can improve the uplink performance from the viewpoint of the serving cell. This is an obvious advantage, especially accounting for the fact that it is the serving cell that receives data send over the uplink E-DCH channel. However, it does not improve the uplink channel performance from the viewpoint of the assisting base station, which also needs CQI and HARQ feedback messages, but rather may make the situation worse for it. In case of the large link imbalance, failing to receive correctly either CQI or HARQ messages by the assisting cell may lead to the worsen downlink performance and, as a result, compromise the whole MF operation.

One of the solutions to ensure the reliable reception of the uplink feedback channel at the assisting Node B is to boost the HS-DPCCH power on which CQI and HARQ messages are transmitted. The penalty for this solution is that less power remains for the E-DCH channel. Since MF is applied to UEs residing at the cell edge, it is important that the uplink performance remains at some minimum level and/or at the level comparable to the non-MF case so that downlink gains brought by MF are not diminished by loss in the uplink direction.

Another solution is that the network utilizes the TxD feature, in particular CLTD, and indicates which cell provides the feedback. With that approach network can ask the assisting cell to provide the feedback. However, at the moment this option is feasible only for the DCH uplink data channel. In case of E-DCH, it is always the serving cell which must be followed for the feedback. So, configuring MF in downlink with DCH in uplink is in principle feasible, but will compromise the whole performance due to the limited uplink DCH performance compared with the performance of the E-DCH.

Document US 2011/176593 discusses uplink diversity and related feedback, and merely teaches that UE should select which feedback to receive.

### Summary of the invention

It is an object of the present invention to improve the prior art.

The invention is defined by the independent claims. The following presents some example embodiments.

According to a first aspect of the invention, there is provided an apparatus, comprising deciding means adapted to meet a decision if any of a first cell device and a second cell device provides a feedback for an uplink transmit diversity of at least two antennas of a terminal, determining means adapted to determine, if it is decided that the feedback is to be provided, whether the first cell device or the second cell device or both provide the feedback; providing means adapted to provide the determination whether the first cell or the second cell provides the feedback to at least one of the first cell device and the second cell device.

In the apparatus, the determining by the determining means may be based on a first report received from the first cell device and a second report received from the second cell device
different from the first cell device, wherein the first report is related to a first quality of a first uplink or downlink from the first cell device to the terminal and the second report is related to a second quality of a second uplink or downlink from the second cell device to the terminal.

In the apparatus, the deciding means may be adapted to decide that the first cell device provides the feedback if at least one of the following conditions is fulfilled:
a) the first cell device is configured as an assisting cell and a difference of the first quality and the second quality is larger than an imbalance threshold and there is a data transmission from the first cell device and the second cell device to the terminal;
b) the first cell device is configured as the assisting cell and a difference of the first quality and the second quality is larger than an imbalance threshold and more data are to be sent to the terminal by the first cell device than by the second cell device;
c) the first cell device is configured as a serving cell and less data than a downlink amount threshold are to be sent to the terminal by the second cell device, which is configured as an assisting cell;
d) the first cell device is configured as the serving cell and more data than an uplink amount threshold are to be sent by the terminal;
*e)* the first cell device has experienced less re-configurations than the second cell device.

The apparatus may further comprise controlling means adapted to disable the uplink transmit diversity if the deciding means decides that none of the first and second cell devices provides the feedback.

The apparatus may further comprise selecting means adapted to select one of the following criteria:
- one of the first cell device and the second cell device has a better or worse uplink quality than the other of the first cell device and the second cell device;
- one of the first cell device and the second cell device has a better or worse downlink quality than the other of the first cell device and the second cell device;
- one of the first cell device and the second cell device has transmitted more data in the downlink in a recent period of time than the other of the first cell device and the second cell device;
- one of the first cell device and the second cell device has been retransmitting a packet in the downlink even though the apparatus indicated a successful reception of the packet;
- one of the first cell device and the second cell device is configured as a serving cell in multiflow operation if the amount of UL data exceeds the predefined threshold; and
- one of the first cell device and the second cell device is configured as the serving cell and a block error rate lower than an error threshold is required for data to be transmitted in the uplink; and
criterion providing means adapted to provide the selected criterion to at least one of the first cell device and the second cell device for transmitting to the terminal, if the determining means determines that both, the first cell device and the second cell device, provide the feedback.

According to a second aspect of the invention, there is provided an apparatus, comprising deciding processor adapted to meet a decision if any of a first cell device and a second cell device provides a feedback for an uplink transmit diversity of at least two antennas of a terminal, determining processor adapted to determine, if it is decided that the feedback is to be provided, whether the first cell device or the second cell device or both provide the feedback; providing processor adapted to provide the determination whether the first cell or the second cell provides the feedback to at least one of the first cell device and the second cell device.

In the apparatus, the determining by the determining processor may be based on a first report received from the first cell device and a second report received from the second cell device different from the first cell device, wherein the first report is related to a first quality of a first uplink or downlink from the first cell device to the terminal and the second report is related to a second quality of a second uplink or downlink from the second cell device to the terminal.

In the apparatus, the deciding processor may be adapted to decide that the first cell device provides the feedback if at least one of the following conditions is fulfilled:
f) the first cell device is configured as an assisting cell and a difference of the first quality and the second quality is larger than an imbalance threshold and there is a data transmission from the first cell device and the second cell device to the terminal;
g) the first cell device is configured as the assisting cell and a difference of the first quality and the second quality is larger than an imbalance threshold and more data are to be sent to the terminal by the first cell device than by the second cell device;
h) the first cell device is configured as a serving cell and less data than a downlink amount threshold are to be sent to the terminal by the second cell device, which is configured as an assisting cell;
i) the first cell device is configured as the serving cell and more data than an uplink amount threshold are to be sent by the terminal;
*j)* the first cell device has experienced less re-configurations than the second cell device.

The apparatus may further comprise controlling processor adapted to disable the uplink transmit diversity if the deciding processor decides that none of the first and second cell devices provides the feedback.

The apparatus may further comprise selecting processor adapted to select one of the following criteria:
- one of the first cell device and the second cell device has a better or worse uplink quality than the other of the first cell device and the second cell device;
- one of the first cell device and the second cell device has a better or worse downlink quality than the other of the first cell device and the second cell device;
- one of the first cell device and the second cell device has transmitted more data in the downlink in a recent period of time than the other of the first cell device and the second cell device;
- one of the first cell device and the second cell device has been retransmitting a packet in the downlink even though the apparatus indicated a successful reception of the packet;
- one of the first cell device and the second cell device is configured as a serving cell in multiflow operation if the amount of UL data exceeds the predefined threshold; and
- one of the first cell device and the second cell device is configured as the serving cell and a block error rate lower than an error threshold is required for data to be transmitted in the uplink; and
criterion providing processor adapted to provide the selected criterion to at least one of the first cell device and the second cell device for transmitting to the terminal, if the determining processor determines that both, the first cell device and the second cell device, provide the feedback.

According to a third aspect of the invention, there is provided an an apparatus, comprising selecting means adapted to select one of a first cell device and a second cell device different from the first cell device; determining means adapted to determine a beam forming parameter based on a feedback received from the selected one of the first cell device and the second cell device; controlling means adapted to control a signal generating means based on the beam forming parameter.

The apparatus may further comprise signal generating means adapted to generate, taking into account the beam forming parameter, a first signal and a second signal, wherein each of the first signal and the second signal corresponds to a same data, and the first signal and the second signal are to be transmitted together to the first cell device and the second cell device.

In the apparatus, the selecting means may be adapted to select the one of the first cell device and the second cell device based on a semi-static indication received from at least one of the first cell device and the second cell device.

In the apparatus, the selecting means may be adapted to select the one of the first cell device and the second cell device based on at least one of the following criteria:
- the selected one has a better or worse uplink quality than the other of the first cell device and the second cell device;
- the selected one has a better or worse downlink quality than the other of the first cell device and the second cell device;
- the selected one has transmitted more data in the downlink in a recent period of time than the other of the first cell device and the second cell device;
- the selected one has been retransmitting a packet in the downlink even though the apparatus indicated a successful reception of the packet;
- the selected one is configured as a serving cell in multiflow operation and the amount of UL data exceeds the predefined threshold; and
- the selected one is configured as the serving cell and a block error rate lower than an error threshold is required for data to be transmitted in the uplink.

In the apparatus, the selecting means may be adapted to select one of the criteria based on a dynamic indication received from at least one of the first and second cell devices.

According to a fourth aspect of the invention, there is provided an an apparatus, comprising selecting processor adapted to select one of a first cell device and a second cell device different from the first cell device; determining processor adapted to determine a beam forming parameter based on a feedback received from the selected one of the first cell device and the second cell device; controlling processor adapted to control a signal generating processor based on the beam forming parameter.

The apparatus may further comprise signal generating processor adapted to generate, taking into account the beam forming parameter, a first signal and a second signal, wherein each of the first signal and the second signal corresponds to a same data, and the first signal and the second signal are to be transmitted together to the first cell device and the second cell device.

In the apparatus, the selecting processor may be adapted to select the one of the first cell device and the second cell device based on a semi-static indication received from at least one of the first cell device and the second cell device.

In the apparatus, the selecting processor may be adapted to select the one of the first cell device and the second cell device based on at least one of the following criteria:
- the selected one has a better or worse uplink quality than the other of the first cell device and the second cell device;
- the selected one has a better or worse downlink quality than the other of the first cell device and the second cell device;
- the selected one has transmitted more data in the downlink in a recent period of time than the other of the first cell device and the second cell device;
- the selected one has been retransmitting a packet in the downlink even though the apparatus indicated a successful reception of the packet;
- the selected one is configured as a serving cell in multiflow operation and the amount of UL data exceeds the predefined threshold; and
- the selected one is configured as the serving cell and a block error rate lower than an error threshold is required for data to be transmitted in the uplink.

In the apparatus, the selecting processor may be adapted to select one of the criteria based on a dynamic indication received from at least one of the first and second cell devices.

According to a fifth aspect of the invention, there is provided an apparatus, comprising report providing means adapted to provide, to a controlling device , a report on a quality of an uplink or a downlink to a terminal device , wherein the report is received on an uplink or conceived from measurements on an uplink from at least two antennas of the terminal device; deciding means adapted to decide if a determination received from the controlling device is negative; feedback providing means adapted to provide, if the decision is not negative, on the downlink, a feedback to the terminal device, wherein the feedback is related to a transmit diversity of at least two antennas of the terminal device; prohibiting means adapted to prohibit that the feedback providing means to provide the feedback if the received decision is negative.

The apparatus may further comprise criterion providing means adapted to provide an indication of a criterion received from the controlling device to the terminal device, wherein the criterion is to be used by the terminal device to decide from which cell device the feedback is to be received.

The apparatus may further comprise indication providing means adapted to provide an indication received from the controlling device, wherein the indication indicates to the terminal device from which cell device the feedback is to be received.

According to a sixth aspect of the invention, there is provided an apparatus, comprising report providing processor adapted to provide, to a controlling device, a report on a quality of an uplink or a downlink to a terminal device , wherein the report is received on an uplink or conceived from measurements on an uplink from at least two antennas of the terminal device; deciding processor adapted to decide if a determination received from the controlling device is negative; feedback providing processor adapted to provide, if the decision is not negative, on the downlink, a feedback to the terminal device, wherein the feedback is related to a transmit diversity of at least two antennas of the terminal device; prohibiting processor adapted to prohibit that the feedback providing processor to provide the feedback if the received decision is negative.

The apparatus may further comprise criterion providing processor adapted to provide an indication of a criterion received from the controlling device to the terminal device, wherein the criterion is to be used by the terminal device to decide from which cell device the feedback is to be received.

The apparatus may further comprise indication providing processor adapted to provide an indication received from the controlling device, wherein the indication indicates to the terminal device from which cell device the feedback is to be received.

According to a seventh aspect of the invention, there is provided a system, comprising a controlling apparatus according to any of the first and second aspects; a terminal apparatus according to any of the third and fourth aspects; and a first cell apparatus according to any of the fifth and sixth aspects and a second cell apparatus according to any of the fifth and sixth aspects; wherein the first cell apparatus comprises the first cell device of the controlling apparatus and the first cell device of the terminal apparatus; the second cell apparatus comprises the second cell device of the controlling apparatus and the second cell device of the terminal apparatus; the controlling apparatus comprises the controlling device of the first cell apparatus and the controlling device of the second cell apparatus, wherein the controlling device of the first cell apparatus is the same as the controlling device of the second cell apparatus; the terminal apparatus comprises the terminal device of the first cell apparatus and the terminal device of the second cell apparatus, wherein the terminal device of the first cell apparatus is the same as the terminal device of the second cell apparatus; the determination received by at least one of the first and second cell devices comprises the determination provided by the controlling apparatus; and the feedback received by the terminal device comprises the feedback provided by at least one of the first and second cell devices.

According to an eighth aspect of the invention, there is provided a method, comprising deciding if any of a first cell device and a second cell device provides a feedback for an uplink transmit diversity of at least two antennas of a terminal, determining, if it is decided that the feedback is to be provided, whether the first cell device or the second cell device or both provide the feedback; providing the determination whether the first cell or the second cell provides the feedback to at least one of the first cell device and the second cell device.

In the method, the determining may be based on a first report received from the first cell device and a second report received from the second cell device different from the first cell device, wherein the first report is related to a first quality of a first uplink or downlink from the first cell device to the terminal and the second report is related to a second quality of a second uplink or downlink from the second cell device to the terminal.

In the method, the deciding may be adapted to decide that the first cell device provides the feedback if at least one of the following conditions is fulfilled:
a) the first cell device is configured as an assisting cell and a difference of the first quality and the second quality is larger than an imbalance threshold and there is a data transmission from the first cell device and the second cell device to the terminal;
b) the first cell device is configured as the assisting cell and a difference of the first quality and the second quality is larger than an imbalance threshold and more data are to be sent to the terminal by the first cell device than by the second cell device;
c) the first cell device is configured as a serving cell and less data than a downlink amount threshold are to be sent to the terminal by the second cell device, which is configured as an assisting cell;
d) the first cell device is configured as the serving cell and more data than an uplink amount threshold are to be sent by the terminal;
*e)* the first cell device has experienced less re-configurations than the second cell device.

The method may further comprise controlling to disable the uplink transmit diversity if it is decided that none of the first and second cell devices provides the feedback.

The method may further comprise selecting one of the following criteria:
- one of the first cell device and the second cell device has a better or worse uplink quality than the other of the first cell device and the second cell device;
- one of the first cell device and the second cell device has a better or worse downlink quality than the other of the first cell device and the second cell device;
- one of the first cell device and the second cell device has transmitted more data in the downlink in a recent period of time than the other of the first cell device and the second cell device;
- one of the first cell device and the second cell device has been retransmitting a packet in the downlink even though a successful reception of the packet is indicated;
- one of the first cell device and the second cell device is configured as a serving cell in multiflow operation if the amount of UL data exceeds the predefined threshold; and
- one of the first cell device and the second cell device is configured as the serving cell and a block error rate lower than an error threshold is required for data to be transmitted in the uplink; and
providing the selected criterion to at least one of the first cell device and the second cell device for transmitting to the terminal, if it is determined that both, the first cell device and the second cell device, provide the feedback.

According to a ninth aspect of the invention, there is provided a method, comprising selecting one of a first cell device and a second cell device different from the first cell device; determining a beam forming parameter based on a feedback received from the selected one of the first cell device and the second cell device; controlling a signal generating based on the beam forming parameter.

The method may further comprise generating, taking into account the beam forming parameter, a first signal and a second signal, wherein each of the first signal and the second signal corresponds to a same data, and the first signal and the second signal are to be transmitted together to the first cell device and the second cell device.

In the method, the selecting may be adapted to select the one of the first cell device and the second cell device based on a semi-static indication received from at least one of the first cell device and the second cell device.

In the method, the selecting may be adapted to select the one of the first cell device and the second cell device based on at least one of the following criteria:
- the selected one has a better or worse uplink quality than the other of the first cell device and the second cell device;
- the selected one has a better or worse downlink quality than the other of the first cell device and the second cell device;
- the selected one has transmitted more data in the downlink in a recent period of time than the other of the first cell device and the second cell device;
- the selected one has been retransmitting a packet in the downlink even though a successful reception of the packet is indicated;
- the selected one is configured as a serving cell in multiflow operation and the amount of UL data exceeds the predefined threshold; and
- the selected one is configured as the serving cell and a block error rate lower than an error threshold is required for data to be transmitted in the uplink.

In the method, the selecting may be adapted to select one of the criteria based on a dynamic indication received from at least one of the first and second cell devices.

According to a tenth aspect of the invention, there is provided a method, comprising providing, to a controlling device , a report on a quality of an uplink or a downlink to a terminal device , wherein the report is received on an uplink or conceived from measurements on an uplink from at least two antennas of the terminal device; deciding if a determination received from the controlling device is negative; providing, if the decision is not negative, on the downlink, a feedback to the terminal device, wherein the feedback is related to a transmit diversity of at least two antennas of the terminal device; prohibiting to provide the feedback if the received decision is negative.

The method may further comprise providing an indication of a criterion received from the controlling device to the terminal device, wherein the criterion is to be used by the terminal device to decide from which cell device the feedback is to be received.

The method may further comprise providing an indication received from the controlling device, wherein the indication indicates to the terminal device from which cell device the feedback is to be received.

According to an eleventh aspect of the invention, there is provided a method, comprising a controlling method according to the eighth aspect; a terminal method according to the ninth aspect; and a first cell method according to the tenth aspect and a second cell method according to the tenth aspect; wherein an apparatus performing the first cell method comprises the first cell device of the controlling method and the first cell device of the terminal method; an apparatus performing the second cell method comprises the second cell device of the controlling method and the second cell device of the terminal method; an apparatus performing the controlling method comprises the controlling device of the first cell method and the controlling device of the second cell method, wherein the controlling device of the first cell method is the same as the controlling device of the second cell method; an apparatus performing the terminal method comprises the terminal device of the first cell method and the terminal device of the second cell method, wherein the terminal device of the first cell method is the same as the terminal device of the second cell method; the determination received by at least one of the first and second cell devices comprises the determination provided by the apparatus performing the controlling method; and the feedback received by the terminal device comprises the feedback provided by at least one of the first and second cell devices.

The method according to any of the eighth to eleventh aspects may be a method of multiflow operation.

According to a twelfth aspect of the invention, there is provided a computer program product comprising a set of instructions which, when executed on an apparatus, is configured to cause the apparatus to carry out the method according to any one of the eighth to eleventh aspects. The computer program product may be embodied as a computer-readable medium.

According to embodiments of the invention, at least the following advantages are achieved:
Multiflow performance may be enhanced. In particular, the assisting cells get more reliably aware of the quality of their downlink signals/transmissions. Therefore, scheduling of multiflow can be accordingly adapted to improve the overall performance.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein
Fig. 1 shows an apparatus according to an embodiment of the invention;
Fig. 2 shows a method according to an embodiment of the invention;
Fig. 3 shows an apparatus according to an embodiment of the invention;
Fig. 4 shows a method according to an embodiment of the invention;
Fig. 5 shows an apparatus according to an embodiment of the invention;
Fig. 6 shows a method according to an embodiment of the invention; and
Fig. 7 shows a system according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

Bearing the aforementioned considerations in mind, according to embodiments of the present invention, MF and TxD jointly benefit from each other.

One drawback of MF is that even though with MF data transmission several cells, even belonging to different sites, can transmit data to a UE in downlink, there is only one uplink channel over which both feedback and data are transmitted. At the same time, the uplink channel providing the feedback related to downlink data transmissions should be received reliably by all the cells participating in the downlink transmission. In particular, failing to receive HSDPA ACK/NACK messages in the uplink direction may compromise the downlink performance. Notably this does not impact the uplink data channel as it is sufficient for one of the cells to receive the uplink data correctly as there is no cell-specific uplink data. However the uplink feedback channel for HSDPA in the case of Multiflow needs to provide cell-specific information to each cell transmitting HSDPA data in the downlink, hence this channel needs to be reliably received in all Node Bs under which the MF cells are in.

Thus, optimizing the uplink TxD transmission with Multilflow is more important and challenging when compared to a non-MF case, where it is the same (only) base station that sends data in downlink and needs to receive the related feedback correctly in the uplink.

In order to combine efficiently MF and CLTD operation, according to embodiments of the invention, it is allowed that not only the serving cell but also the assisting cells configured for MF operation may provide the feedback of CLTD operation to the terminal. Such flexibility enables the network to send the feedback not only by/from the serving cell and, as a result, the uplink may be optimized from the viewpoint of the assisting cell.

In this respect, it should be noted that for legacy operation only one (primary) cell can transmit the F-TPICH with the CLTD feedback for the UE. According to embodiments of the invention, any of the cells - any cell of the assisted cell group, and any cell of the assisting cell group - may transmit the F-TPICH with its CLTD feedback for the UE. According to embodiments of the invention, the UE may be configured to select dynamically on its own any of the cells for employing that feedback or may be instructed by the network, which cell to select.

As mentioned above, for simplicity and without loss of generality in the sequel we will talk about a system which has one assisting and one assisted cell although there may be more than one assisting and/or more than one assisted cells.

Furthermore, according to embodiments of the invention, the uplink reports are provided to RNC from the NodeBs participating in the MF operation. The uplink reports may be for example UL SIR and/or SIR error information and/or averaged CQI reports from the downlink transmission. Alternatively, or in addition, the RSCP values may be taken into account. Also, the cell may provide uplink performance indications to the RNC which may be conceived by measurements of the uplink performance by the cell.

Having the information on the UE uplink and downlink performance from both serving and assisting cells, the RNC according to embodiments of the invention may pursue one of a few different schemes:
- semi-static indication of the cell which provides the CLTD feedback;
- dynamic choosing of the cell to be followed by a UE based on a criterion given by the network.

According to some embodiments of the invention, it is preconfigured whether the semi-static or the dynamic option is used.

According to other embodiments of the invention, it may be decided (e.g. by the RNC) which option is chosen. For example, the semi-static approach may be chosen e.g. when the configuration and channel dynamics are seen as slow, and/or the amount of CLTD feedback that can be saved in the semi-static case compared to the dynamic case is seen as important.

On the other hand, the dynamic approach where both cells are continuously transmitting the CLTD feedback may be chosen when the channel is seen as dynamic, e.g. because of fast changing propagation characteristics, or fast changing interference characteristics (bursty traffic), and/or the amount of CLTD feedback provided is not seen as important.

The choice between the approaches may be made also based on a comparison of their performances, e.g. the semi-static option may be configured first (as default), and, depending on the link performance, then the dynamic scheme may be employed.

With regards to the semi-static selection of the cell that will provide the CLTD feedback, depending on the amount of data in downlink/uplink directions and link quality, RNC may for example:
a) configure TxD at the assisting cell if the link imbalance is large and there is ongoing data transmission from both the cells or more data is sent via the assisting cell; for example, the link imbalance may be considered as large if the link quality difference exceeds a certain threshold (such as 30% or 50% of the quality criterion of one cell). The threshold may be preconfigured or may be configurable.
b) re-configure TxD to the serving cell if (almost) nothing (i.e. less than a certain amount of data) is sent via the assisting cell and/or there is a significant amount of data in the uplink direction;
*c)* configure TxD at the cell that has been experiencing less re-configurations than the other cell within a certain time frame, which is not necessarily always the serving cell. This is in particular useful in mixed macro and pico environment.

Preferably, in the semistatic option, the feedback is transmitted by the selected cell only and not by the other cell(s).

According to some embodiments, instead of options a) to c), RNC may disable TxD or Multiflow completely. E.g., if only a small amount, or no data is flowing though assisting cell, then the RNC may decide to deactivate Multiflow, or if the uplink link imbalance is high the TxD operation could be disabled instead of trying to optimize which of the links should be the one controlling the TxD operation.

It should be understood that "serving cell" stands for "assisted serving cell" and "assisting cell" stands for "assisting serving cell".

According to the approach with the dynamic choosing the cell to follow, both serving and assisting cells transmit continuously the feedback, typically over their respective F-TPICH channel. Then, the UE autonomously selects the F-TPICH and cell to follow based on predetermined and potentially pre-parametrized criteria. Some exemplary selection criteria according to embodiments of the invention are:
- Select the cell that has the better or worse uplink. The detection of which cell has the better uplink may be made by tracking the received uplink power control commands. The cell sending more down commands is the one currently having the best uplink.
- Select the cell that has the better or worse downlink. The detection of which cell has the better downlink may be made by comparing the CQI reports or CPICH measurements.
- Select the cell that has transmitted more data in the DL in the recent past to improve its reception of the UL control channel.
- Select the cell that has been retransmitting packets in the DL even though the UE indicated successful reception. This is an indication of a too weak HS-DPCCH level in that Node B.
- Select the serving cell if the amount of UL data exceeds the predefined threshold.
- Select the TxD for the cell based on the QoS of the uplink data. For instance if the bitrate is rather low but a very low BLER is required, it may be desirable to fully ensure the best reception by pointing the beam at the cell with stronger DL signal, while if the bitrate may be higher but the service can tolerate a larger BLER the opposite may be done.

In case of the semi-static allocation scheme, it is generally sufficient that the network has a capability of specifying, to the UE, a cell to be followed by the UE for the CLTD feedback. The choice of the cell may be made by the network, e.g. the RNC and the algorithms may potentially be implementation specific and not described in the standard specifications. According to HSPA Rel-11, there is no choice because the UE has always to follow the serving HSPDA cell, except for a case where the downlink DCH channel is used. In this case, the network has to provide an explicit cell identifier since there is no concept of the serving cell.

Below, in table 1, there is an excerpt from 3GPP TS 25.331 showing the "Uplink CLTD Info FDD". The last IE "Primary CPICH Info" (underlined in table 1) is used at the moment only with the DCH DL channel. By relaxing that procedural limitation, network can use that IE also with the HSDPA DL channel by specifying a cell other than the serving one. According to some embodiments, there may be a limitation that not any cell, but rather only the ones configured for MF can provide the feedback.

**Table 1: 3GPP TS 25.331 section 10.3.6.125: Uplink CLTD info FDD**

| **Information Element/Group name** | **Need** | **Multi** | **Type and Referenc e** | **Semantics description** | **Version** |
|---|---|---|---|---|---|
| CHOICE Configuration info | MP | | | | REL-11 |
| >Continue | | | (no data) | Used in reconfiguration s without interruption of uplink CLTD operation. | REL-11 |
| >New configuration | | | | | |
| >>S-DPCCH info | MP | | | | REL-11 |
| >>>S-DPCCH/DPCCH power offset | MP | | Integer (0..6) | Refer to quantization of the power offset in [28]. | REL-11 |
| >>F-TPICH info | MP | | | | |
| >>>F-TPICH slot format | MP | | Integer (0..10) | Slot format used by F-TPICH in [26]. | REL-11 |
| >>>F-TPICH code number | MP | | Integer (0..255) | | REL-11 |
| >>>F-TPICH frame offset | MP | | Integer (0..38144 | Offset (in number of | REL-11 |
| | | | by step of 256) | chips) between the beginning of the P-CCPCH frame and the beginning of the F-TPICH frame This is called ^{▪}F-TPICH,m in [26]. | |
| >>>F-TPICH reliability window size | MP | | Enumerat ed (3 slots, 240 slots) | Number of slots for UE to measure the reliability of the received TPI on F-TPICH. | REL-11 |
| >>Initial CLTD activation state | MP | | Enumerat ed (first state, fourth state) | Indicates the CLTD activation state as described in [27]. | REL-11 |
| >>Primary CPICH info | *CV-DCHOnI y* | | Primary CPICH Info 10.3.6.60 | Indicates the cell that transmits the precoding weights amongst the active set cells. | REL-11 |

With regards to the scheme when a UE chooses autonomously a cell to be followed for the CLTD feedback, as mentioned earlier, according to some embodiments the network provides the configuration for the F-TPICH feedback channel for all the cells, which a UE can potentially choose. As opposed to the "Uplink CLTD Info FDD" in 3GPP TS 25.311 v 11.2.0, R2-122418 already aims at separation of the basic CLTD configuration from the F-TPICH channel capturing agreements from LS R1-120859. The IE below shows the proposed tabular for the F-TPICH configuration that may be provided for each radio link. Even though R2-122418 assumes that the content of that configuration info must be the same and must be provided only for the links from the same Node B, according to some embodiments of the invention, the content may be different. With such an approach, a UE can choose which cell to follow with an assumption that the F-TPICH configuration is given for that cell.

**Table 2: F-TPICH configuration according to 3GPP TS 25.311 v 11.2.0**

| **Information Element/Group name** | **Need** | **Multi** | **Type and reference** | **Semantics description** | **Version** |
|---|---|---|---|---|---|
| F-TPICH slot format | MP | | Integer (0..9) | Slot format used by F-TPICH in [26]. | REL-11 |
| F-TPICH code number | MP | | Integer (0..255) | | REL-11 |
| F-TPICH frame offset | MP | | Integer (0..38144 by step of 256) | Offset (in number of chips) between the beginning of the P-CCPCH frame and the beginning of the F-TPICH frame. This is called ^{▪}F-TPICH,m in [26]. | REL-11 |

As for the criteria for choosing dynamically the cell, this parameter may be signaled by the network to the terminal from a predefined list of different criteria, as exemplarily indicated hereinabove. The parameter itself can reside in IE "Uplink CLTD Info FDD". Alternatively, the UE may autonomously select one criterion. Still alternatively, the UE may have a default choice (e.g. the serving cell), and only if at least a certain number (e.g. 1, 2, 3,...) of criteria is fulfilled in favor of an assisting cell, this assisting cell is followed.

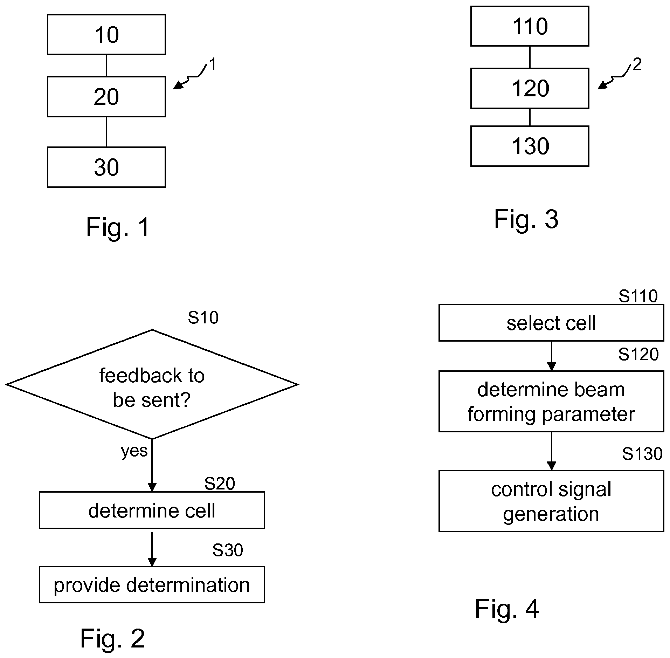

Fig. 1 shows an apparatus 1 according to an embodiment of the invention. The apparatus 1 may be a controller such as a RNC. Fig. 2 shows a method according to an embodiment of the invention. The apparatus according to Fig. 1 may perform the method of Fig. 2 but is not limited to this method. The method of Fig. 2 may be performed by the apparatus of Fig. 1 but is not limited to being performed by this apparatus.

The apparatus 1 comprises deciding means 10, determining means 20, and providing means 30.

The deciding means 10 decides if any of multiple cells provides a feedback to a terminal having plural antennas in order to control an uplink transmit diversity of the plural antennas (S10). For example, the deciding may be based on a respective reports received from the plural cells, which are related to a respective quality of the downlink from the respective cell to the terminal. If it is decided that a feedback is to be given (i.e. for example, that transmit diversity is not to be disabled), based on the respective reports, the determining means 20 determines which of the plural cells provides the feedback (S20). The providing means 30 provides the decision to at least one of the plural cells (S30).

Fig. 3 shows an apparatus 2 according to an embodiment of the invention. The apparatus 2 may be a terminal such as a user equipment. Fig. 4 shows a method according to an embodiment of the invention. The apparatus according to Fig. 3 may perform the method of Fig. 4 but is not limited to this method. The method of Fig. 4 may be performed by the apparatus of Fig. 3 but is not limited to being performed by this apparatus.

The apparatus 2 comprises selecting means 110, determining means 120, and controlling means 130.

The selecting means 110 selects one of plural cells (S110). The determining means 120 determines a beam forming parameter based on a feedback received from the selected one of the plural cells (S120). The controlling means 130 controls a signal generating means based on the beam forming parameter (S130). The signal generating means may be suitable for generating, taking into account the beam forming parameter, a first signal and a second signal, wherein each of the first signal and the second signal corresponds to data to be transmitted to the plural cells.

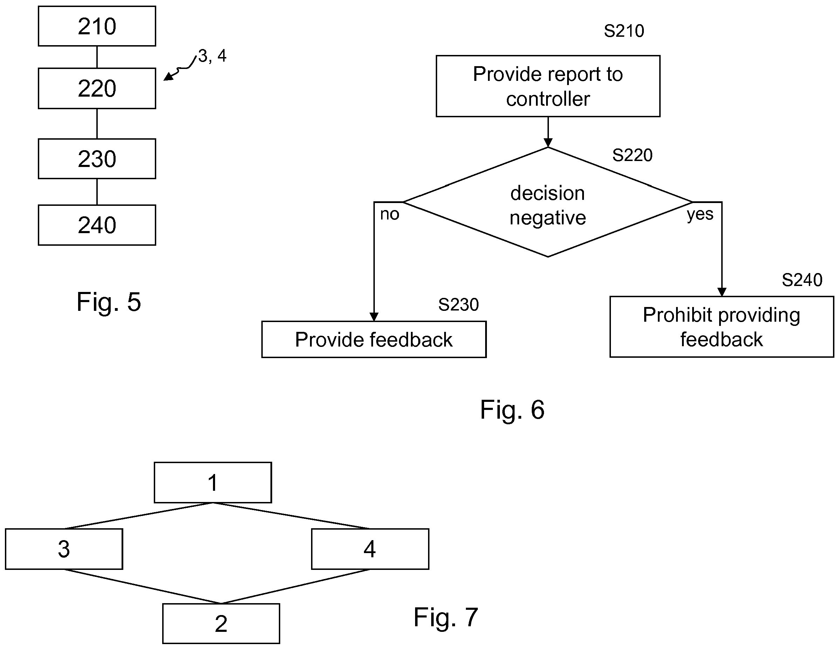

Fig. 5 shows an apparatus 3, 4 according to an embodiment of the invention. The apparatus 3, 4 may be a base station or a cell such as a NodeB or eNodeB. Fig. 6 shows a method according to an embodiment of the invention. The apparatus according to Fig. 5 may perform the method of Fig. 6 but is not limited to this method. The method of Fig. 6 may be performed by the apparatus of Fig. 5 but is not limited to being performed by this apparatus.

The apparatus 3, 4 comprises report providing means 210, deciding means 220, feedback providing means 230, and prohibiting means 240.

The report providing means 210 provides, to a controlling device such as an RNC, a report on a quality of a downlink to a terminal, wherein the report is received on an uplink from at least two antennas of the terminal (S210). The deciding means 220 decides if a decision received from the controlling device is negative (S220). The feedback providing means 230 may provide, on the downlink, a feedback on a performance of the uplink to the terminal, wherein the feedback is related to a transmit diversity of the at least two antennas of the terminal. If the decision is not negative, the feedback providing means 230 provides the feedback (S230). On the other side, if the deciding means 220 decides that a decision received from the controlling device is negative, the prohibiting means 240 prohibits that the feedback providing means 230 to provide the feedback (S240).

Fig. 7 shows a system according to embodiments of the invention. The system comprises a controlling device 1 such as the one of Fig. 1, a terminal device 2 such as the one of Fig. 3, and first and second cell devices 3, 4 such as the ones of Fig. 5.

The controlling device 1 is connected to each of the two cell devices 3, 4, and each of the two cell devices 3, 4 is connected to the terminal device 2.

In operation, the determination received by at least one of the first and second cell devices 3, 4 comprises the determination provided by the controlling apparatus 1; and the feedback received by the terminal device 2 comprises the feedback provided by at least one of the first and second cell devices 3, 4.

According to embodiments of the invention, one or more of the following pieces of information may be exchanged between RNC, cell(s), and terminal (UE), respectively:
- RNC -> cell: configures MF, reconfigures connections to new cells, e.g. because of serving cell change or new assisting cell etc.
- RNC -> UE (via cell(s)): configures MF, reconfigures connections to new cells;
- RNC -> cell: configures CLTD (whether to provide CLTD feedback to the UE);
- RNC -> UE: configures CLTD (whether to employ CLTD; in the semi-static case: which cell to select; in the dynamic case: which criterion to use for selection;
- cell -> UE: sends CLTD feedback (beamforming parameters);
- cell -> RNC: provides DL channel quality reports (e.g. based on CQI);
- cell -> RNC: provides UL channel quality reports;
- UE -> cell: sends CQI reports;
- UE -> cell: transmits signals employing CLTD feedback;
- UE -> RNC (via cell(s)): provides DL channel measurements, also used for reconfiguration of cells (e.g. serving cell change = handover).

Signalling between RNC and UE may typically happen as RRC signalling, via the cell (NodeB), without the NodeB reading the signalling.

According to embodiments of the invention, one or more of the following activities may be performed by the network entities:
RNC may decide one or more of:
   - whether to use CLTD;
   - whether to use semi-static or dynamic approach;
   - which criterion to use by the UE in the dynamic approach;
   - Which cell's feedback the UE should use in the semi-static case.

The Cell may perform one or more of the following actions:
- Figure out the CLTD parameter;
- Transmit the CLTD parameter.

The UE may perform one or more of the following actions:
- Select cell whose feedback should be used (in dynamic case);
- Use feedback of indicated cell (in semi-static case);
- Apply feedback.

Embodiments of the invention are described with respect to an UMTS/HSPA system. However, other embodiments may be implemented in LTE, LTE-A, WiFi, WiMax etc., and mixed systems thereof, if a functionalities comparable to multiflow and transmit diversity are implemented.

Multiflow is a feature of HSPA Rel. 11. However, embodiments of the invention may be employed based on other features than multiflow such as multi-carrier HSDPA, as long as two cells send data corresponding to one data stream to the terminal.

A terminal may comprise any kind of terminal that may be connected to a base station of the respective RAT such as user equipment, mobile phone, PDA, laptop, smartphone etc.

A base station or cell may comprise any kind of base stations or cells of the respective RAT such as NodeB, eNodeB, pico cell, femto cell, wireless access point etc.

A Boolean parameter may be transmitted between entities such as network elements or components thereof either explicitly, i.e. by transmitting a value such as 1 and 0, or implicitly. In the latter case, presence and non-presence of a parameter in a message may be associated to one of the TRUE and FALSE values of the Boolean parameter, respectively.

If not otherwise stated or otherwise made clear from the context, the statement that two entities are different means that they are differently addressed in the core network. It does not necessarily mean that they are based on different hardware. That is, each of the entities described in the present description may be based on a different hardware, or some or all of the entities may be based on the same hardware.

According to the above description, it should thus be apparent that exemplary embodiments of the present invention provide, for example a terminal such as a user equipment, or a component thereof, an apparatus embodying the same, a method for controlling and/or operating the same, and computer program(s) controlling and/or operating the same as well as mediums carrying such computer program(s) and forming computer program product(s). Furthermore, it should thus be apparent that exemplary embodiments of the present invention provide, for example a base station or a cell such as a NodeB or an eNodeB, or a component thereof, an apparatus embodying the same, a method for controlling and/or operating the same, and computer program(s) controlling and/or operating the same as well as mediums carrying such computer program(s) and forming computer program product(s). Still furthermore, it should thus be apparent that exemplary embodiments of the present invention provide, for example a controller such as an RNC, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus (1) of a radio communication network utilizing downlink multi-flow transmission with closed-loop uplink transmit diversity, comprising
deciding means (10) adapted to meet a decision (S10) if any of a first cell device (3) and a second cell device (4) provides a feedback for an uplink transmit diversity of at least two antennas of a terminal (2),
determining means (20) adapted to determine (S20), if it is decided that the feedback is to be provided, which one of the first cell device (3) or the second cell device (4) provides the feedback;
providing means (30) adapted to provide the determination (S30) whether the first cell device (3) or the second cell device (4) provides the feedback to at least one of the first cell device (3) and the second cell device (4).

2. The apparatus according to claim 1, wherein the determining by the determining means is based on a first report received from the first cell device (3) and a second report received from the second cell device (4) different from the first cell device (3), wherein the first report is related to a first quality of a first uplink or downlink from the first cell device (3) to the terminal (2) and the second report is related to a second quality of a second uplink or downlink from the second cell device (4) to the terminal (2).

3. The apparatus according to claim 1, wherein the deciding means is adapted to decide that the first cell device (3) provides the feedback if at least one of the following conditions is fulfilled:
a) the first cell device (3) is configured as an assisting cell and a difference of a first quality of a first uplink or downlink from the first cell device (3) to the terminal (4) and a second quality of a second uplink or downlink from the second cell device (4) to the terminal (2) is larger than an imbalance threshold and there is a data transmission from the first cell device (3) and the second cell device (4) to the terminal (2) ;
b) the first cell device (3) is configured as the assisting cell and a difference of the first quality and the second quality is larger than an imbalance threshold and more data are to be sent to the terminal (2) by the first cell device than by the second cell device (4);
c) the first cell device (3) is configured as a serving cell and less data than a downlink amount threshold are to be sent to the terminal (2) by the second cell device (4), which is configured as an assisting cell;
d) the first cell device (3) is configured as the serving cell and more data than an uplink amount threshold are to be sent by the terminal (2);
*e)* the first cell device (3) has experienced less re-configurations than the second cell device (4).

4. Apparatus (3, 4) of a radio communication network utilizing downlink multi-flow transmission with closed-loop uplink transmit diversity, comprising
report providing means (210) adapted to provide (S210), to a controlling device (1), a report on a quality of an uplink or a downlink to a terminal device (2), wherein the report is received on an uplink or conceived from measurements on an uplink from at least two antennas of the terminal device (2);
deciding means (220) adapted to decide (S220) if a determination received from the controlling device (1) is negative, wherein the determination is about whether the apparatus (3,4) is to provide feedback to the terminal device (2) or not;
feedback providing means (230) adapted to provide (S230), if the decision is not negative, on the downlink, a feedback to the terminal device (2), wherein the feedback is related to a transmit diversity of at least two antennas of the terminal device (2);
prohibiting means (240) adapted to prohibit (S240) the feedback providing means to provide the feedback if the received decision is negative.

5. A radio communication system utilizing downlink multi-flow transmission with closed-loop uplink transmit diversity, comprising
a controlling apparatus (1) according to apparatus of any of claims 1 to 3;
a first cell apparatus (3) according to apparatus of claim 4 and a second cell apparatus (4) according to apparatus of claim 4, wherein both the controlling device (1) of the first cell apparatus (3) and the controlling device (1) of the second cell apparatus (4) are the same controlling apparatus (1); the determination received by at least one of the first and second cell apparatuses (3,4) comprises the determination provided by the controlling apparatus (1); and
the feedback received by the terminal device (2) comprises the feedback provided by at least one of the first and second cell apparatuses (3,4).

6. Method for a radio communication network utilizing downlink multi-flow transmission with closed-loop uplink transmit diversity, comprising
Deciding (S10) if any of a first cell device (3) and a second cell device (4) provides a feedback for an uplink transmit diversity of at least two antennas of a terminal (2),
determining (S20), if it is decided that the feedback is to be provided, which one of the first cell device (3) or the second cell device (4) provides the feedback;
providing (S30) the determination whether the first cell device (3) or the second cell device (4) provides the feedback to at least one of the first cell device (3) and the second cell device (4).

7. The method according to claim 6, wherein the deciding is adapted to decide that the first cell device (3) provides the feedback if at least one of the following conditions is fulfilled:
a) the first cell device (3) is configured as an assisting cell and a difference of a first quality of a first uplink or downlink from the first cell device (3) to the terminal (2) and a second quality of a second uplink or downlink from the second cell device (4) to the terminal (2) is larger than an imbalance threshold and there is a data transmission from the first cell device and the second cell device to the terminal;
b) the first cell device (3) is configured as the assisting cell and a difference of the first quality and the second quality is larger than an imbalance threshold and more data are to be sent to the terminal (2) by the first cell device (3) than by the second cell device (4);
c) the first cell device (3) is configured as a serving cell and less data than a downlink amount threshold are to be sent to the terminal (2) by the second cell device (4), which is configured as an assisting cell;
d) the first cell device (3) is configured as the serving cell and more data than an uplink amount threshold are to be sent by the terminal (2);
*e)* the first cell device has experienced less re-configurations than the second cell device.

8. Method for a radio communication network utilizing downlink multi-flow transmission with closed-loop uplink transmit diversity, comprising
Providing (S210), to a controlling device (1), a report on a quality of an uplink or a downlink to a terminal device (2), wherein the report is received on an uplink or conceived from measurements on an uplink from at least two antennas of the terminal device (2);
deciding (S220) if a determination received from the controlling device (1) is negative, wherein the determination is about whether the receiver of the determination is to provide feedback to the terminal device (2) or not;
providing (S230), if the decision is not negative, on the downlink, a feedback to the terminal device (2), wherein the feedback is related to a transmit diversity of at least two antennas of the terminal device (2);
prohibiting (S240) to provide the feedback if the received decision is negative.

9. The method according to claim 8, further comprising
providing an indication of a criterion received from the controlling device (1) to the terminal device (2), wherein the criterion is to be used by the terminal device (2) to decide from which cell device the feedback is to be received.

10. A computer program product comprising a set of instructions which, when executed on an apparatus, is configured to cause the apparatus to carry out the method according to any one of claims 6 to 9.

11. The computer program product according to claim 10, embodied as a computer-readable medium.

## Patentansprüche

1. Gerät (1) eines Funkkommunikationsnetzwerks, das Abwärtsstrecken-Multiflow-Übertragung mit Regelkreis-Aufwärtsstrecken-Übertragungsdiversität nutzt, umfassend
Entscheidungsmittel (10), angepasst zum Treffen einer Entscheidung (S10), ob eine einer Vorrichtung einer ersten Zelle (3) und einer Vorrichtung einer zweiten Zelle (4) eine Rückmeldung für eine Aufwärtsstrecken-Übertragungsdiversität von mindestens zwei Antennen eines Endgeräts (2) bereitstellt,
Bestimmungsmittel (20), angepasst zum Bestimmen (S20), wenn entschieden wird, dass die Rückmeldung bereitzustellen ist, welche eine der Vorrichtung der ersten Zelle (3) oder der Vorrichtung der zweiten Zelle (4) die Rückmeldung bereitstellt;
Bereitstellungsmittel (30), angepasst zum Bereitstellen der Bestimmung (S30), ob die Vorrichtung der ersten Zelle (3) oder die Vorrichtung der zweiten Zelle (4) die Rückmeldung bereitstellt, mindestens einer der Vorrichtung der ersten Zelle (3) und der Vorrichtung der zweiten Zelle (4).

2. Gerät nach Anspruch 1, wobei das Bestimmen durch das Bestimmungsmittel auf einem von der Vorrichtung der ersten Zelle (3) empfangenen ersten Bericht und einem von der Vorrichtung der zweiten Zelle (4), die von der Vorrichtung der ersten Zelle (3) verschieden ist, empfangenen zweiten Bericht basiert, wobei der erste Bericht eine erste Qualität einer ersten Aufwärtsstrecke oder Abwärtsstrecke von der Vorrichtung der ersten Zelle (3) zu dem Endgerät (2) betrifft und der zweite Bericht eine zweite Qualität einer zweiten Aufwärtsstrecke oder Abwärtsstrecke von der Vorrichtung der zweiten Zelle (4) zu dem Endgerät (2) betrifft.

3. Gerät nach Anspruch 1, wobei das Entscheidungsmittel angepasst ist, zu entscheiden, dass die Vorrichtung der ersten Zelle (3) die Rückmeldung bereitstellt, wenn mindestens eine der folgenden Bedingungen erfüllt ist:
a) die Vorrichtung der ersten Zelle (3) ist als eine unterstützende Zelle konfiguriert und ein Unterschied einer ersten Qualität einer ersten Aufwärtsstrecke oder Abwärtsstrecke von der Vorrichtung der ersten Zelle (3) zu dem Endgerät (4) und einer zweiten Qualität einer zweiten Aufwärtsstrecke oder Abwärtsstrecke von der Vorrichtung der zweiten Zelle (4) zu dem Endgerät (2) ist größer als ein Unsymmetrie-Schwellenwert und es besteht eine Datenübertragung von der Vorrichtung der ersten Zelle (3) und der Vorrichtung der zweiten Zelle (4) zu dem Endgerät (2);
b) die Vorrichtung der ersten Zelle (3) ist als die unterstützende Zelle konfiguriert und ein Unterschied der ersten Qualität und der zweiten Qualität ist größer als ein Unsymmetrie-Schwellenwert und es sind mehr Daten durch die Vorrichtung der ersten Zelle als durch die Vorrichtung der zweiten Zelle (4) an das Endgerät zu senden;
c) die Vorrichtung der ersten Zelle (3) ist als eine versorgende Zelle konfiguriert und weniger Daten als ein Abwärtsstrecken-Mengenschwellenwert sind durch die Vorrichtung der zweiten Zelle (4), die als eine unterstützende Zelle konfiguriert ist, an das Endgerät (2) zu senden;
d) die Vorrichtung der ersten Zelle (3) ist als die versorgende Zelle konfiguriert und mehr Daten als ein Aufwärtsstrecken-Mengenschwellenwert sind durch das Endgerät (2) zu senden;
e) die Vorrichtung der ersten Zelle (3) hat weniger Neukonfigurationen als die Vorrichtung der zweiten Zelle (4) erfahren.

4. Gerät (3, 4) eines Funkkommunikationsnetzwerks, das Abwärtsstrecken-Multiflow-Übertragung mit Regelkreis-Aufwärtsstrecken-Übertragungsdiversität nutzt, umfassend
Berichtsbereitstellungsmittel (210), angepasst zum Bereitstellen (S210), einer steuernden Vorrichtung (1), eines Berichts über eine Qualität einer Aufwärtsstrecke oder einer Abwärtsstrecke zu einer Endgerätvorrichtung (2), wobei der Bericht auf einer Aufwärtsstrecke empfangen wird oder aus Messungen auf einer Aufwärtsstrecke von mindestens zwei Antennen der Endgerätvorrichtung (2) aufgenommen wird;
Entscheidungsmittel (220), angepasst zum Entscheiden (S220), ob eine von der steuernden Vorrichtung (1) empfangene Bestimmung negativ ist, wobei die Bestimmung darüber ist, ob das Gerät (3, 4) der Endgerätvorrichtung (2) Rückmeldung bereitzustellen hat oder nicht;
Rückmeldungsbereitstellungsmittel (230), angepasst zum Bereitstellen (S230), wenn die Entscheidung nicht negativ ist, auf der Abwärtsstrecke, einer Rückmeldung der Endgerätvorrichtung (2), wobei die Rückmeldung eine Übertragungsdiversität von mindestens zwei Antennen der Endgerätvorrichtung (2) betrifft;
Untersagungsmittel (240), angepasst zum Untersagen (S240) des Rückmeldungsbereitstellungsmittels, die Rückmeldung bereitzustellen, wenn die empfangene Entscheidung negativ ist.

5. Funkkommunikationssystem, das Abwärtsstrecken-Multiflow-Übertragung mit Regelkreis-Aufwärtsstrecken-Übertragungsdiversität nutzt, umfassend
ein steuerndes Gerät (1) gemäß dem Gerät nach einem der Ansprüche 1 bis 3;
ein Gerät einer ersten Zelle (3) gemäß dem Gerät nach Anspruch 4, und ein Gerät einer zweiten Zelle (4) gemäß dem Gerät nach Anspruch 4, wobei sowohl die steuernde Vorrichtung (1) des Geräts der ersten Zelle (3) als auch die steuernde Vorrichtung (1) des Geräts der zweiten Zelle (4) dasselbe steuernde Gerät (1) sind;
die durch mindestens eines der Geräte der ersten und zweiten Zelle (3, 4) empfangene Bestimmung die durch das steuernde Gerät (1) bereitgestellte Bestimmung umfasst; und
die durch die Endgerätvorrichtung (2) empfangene Rückmeldung die durch mindestens eines der Geräte der ersten und zweiten Zelle (3, 4) bereitgestellte Rückmeldung umfasst.

6. Verfahren für ein Funkkommunikationsnetzwerk, das Abwärtsstrecken-Multiflow-Übertragung mit Regelkreis-Aufwärtsstrecken-Übertragungsdiversität nutzt, umfassend
Entscheiden (S10), ob eine einer Vorrichtung einer ersten Zelle (3) und einer Vorrichtung einer zweiten Zelle (4) eine Rückmeldung für eine Aufwärtsstrecken-Übertragungsdiversität von mindestens zwei Antennen eines Endgeräts (2) bereitstellt,
Bestimmen (S20), wenn entschieden wird, dass die Rückmeldung bereitzustellen ist, welches eine der Vorrichtung der ersten Zelle (3) oder der Vorrichtung der zweiten Zelle (4) die Rückmeldung bereitstellt;
Bereitstellen (S30) der Bestimmung, ob die Vorrichtung der ersten Zelle (3) oder die Vorrichtung der zweiten Zelle (4) die Rückmeldung bereitstellt, mindestens einer der Vorrichtung der ersten Zelle (3) und der Vorrichtung der zweiten Zelle (4).

7. Verfahren nach Anspruch 6, wobei das Entscheiden angepasst ist, zu entscheiden, dass die Vorrichtung der ersten Zelle (3) die Rückmeldung bereitstellt, wenn mindestens eine der folgenden Bedingungen erfüllt ist:
a) die Vorrichtung der ersten Zelle (3) ist als eine unterstützende Zelle konfiguriert und ein Unterschied einer ersten Qualität einer ersten Aufwärtsstrecke oder Abwärtsstrecke von der Vorrichtung der ersten Zelle (3) zu dem Endgerät (2) und einer zweiten Qualität einer zweiten Aufwärtsstrecke oder Abwärtsstrecke von der Vorrichtung der zweiten Zelle (4) zu dem Endgerät (2) ist größer als ein Unsymmetrie-Schwellenwert und es besteht eine Datenübertragung von der Vorrichtung der ersten Zelle und der Vorrichtung der zweiten Zelle zu dem Endgerät;
b) die Vorrichtung der ersten Zelle (3) ist als die unterstützende Zelle konfiguriert und ein Unterschied der ersten Qualität und der zweiten Qualität ist größer als ein Unsymmetrie-Schwellenwert und es sind mehr Daten durch die Vorrichtung der ersten Zelle (3) als durch die Vorrichtung der zweiten Zelle (4) an das Endgerät (2) zu senden;
c) die Vorrichtung der ersten Zelle (3) ist als eine versorgende Zelle konfiguriert und weniger Daten als ein Abwärtsstrecken-Mengenschwellenwert sind durch die Vorrichtung der zweiten Zelle (4), die als eine unterstützende Zelle konfiguriert ist, an das Endgerät (2) zu senden;
d) die Vorrichtung der ersten Zelle (3) ist als die versorgende Zelle konfiguriert und mehr Daten als ein Aufwärtsstrecken-Mengenschwellenwert sind durch das Endgerät (2) zu senden;
e) die Vorrichtung der ersten Zelle hat weniger Neukonfigurationen als die Vorrichtung der zweiten Zelle erfahren.

8. Verfahren für ein Funkkommunikationsnetzwerk, das Abwärtsstrecken-Multiflow-Übertragung mit Regelkreis-Aufwärtsstrecken-Übertragungsdiversität nutzt, umfassend
Bereitstellen (S210), einer steuernden Vorrichtung (1), eines Berichts über eine Qualität einer Aufwärtsstrecke oder einer Abwärtsstrecke zu einer Endgerätvorrichtung (2), wobei der Bericht auf einer Aufwärtsstrecke empfangen wird oder aus Messungen auf einer Aufwärtsstrecke von mindestens zwei Antennen der Endgerätvorrichtung (2) aufgenommen wird;
Entscheiden (S220), ob eine von der steuernden Vorrichtung (1) empfangene Bestimmung negativ ist, wobei die Bestimmung darüber ist, ob der Empfänger der Bestimmung der Endgerätvorrichtung (2) Rückmeldung bereitzustellen hat oder nicht;
Bereitstellen (S230), wenn die Entscheidung nicht negativ ist, auf der Abwärtsstrecke, einer Rückmeldung der Endgerätvorrichtung (2), wobei die Rückmeldung eine Übertragungsdiversität von mindestens zwei Antennen der Endgerätvorrichtung (2) betrifft;
Untersagen (S240), die Rückmeldung bereitzustellen, wenn die empfangene Entscheidung negativ ist.

9. Verfahren nach Anspruch 8, ferner umfassend:
Bereitstellen einer Angabe eines Kriteriums, empfangen von der steuernden Vorrichtung (1), der Endgerätvorrichtung (2), wobei das Kriterium durch die Endgerätvorrichtung (2) zu verwenden ist, zu entscheiden, von welcher Vorrichtung einer Zelle die Rückmeldung zu empfangen ist.

10. Computerprogrammprodukt, umfassend eine Menge von Anweisungen, die, wenn sie auf einem Gerät ausgeführt wird, konfiguriert ist, zu bewirken, dass das Gerät das Verfahren nach einem der Ansprüche 6 bis 9 ausführt.

11. Computerprogrammprodukt nach Anspruch 10, verkörpert als ein computerlesbares Medium.

## Revendications

1. Appareil (1) d'un réseau de radiocommunication utilisant une transmission à flux multiples en liaison descendante avec diversité de transmission en boucle fermée en liaison montante, comprenant :
un moyen de décision (10) adapté pour répondre à une décision (S10) si l'un quelconque d'un premier dispositif cellulaire (3) et d'un second dispositif cellulaire (4) fournit une rétroaction pour une diversité de transmission en liaison montante d'au moins deux antennes d'un terminal (2),
un moyen de détermination (20) adapté pour déterminer (S20), s'il est décidé que la rétroaction doit être fournie, lequel du premier dispositif cellulaire (3) ou du second dispositif cellulaire (4) fournit la rétroaction ;
un moyen (30) adapté pour fournir la détermination (S30) du fait que le premier dispositif cellulaire (3) ou le second dispositif cellulaire (4) fournit, ou non, la rétroaction à au moins l'un du premier dispositif cellulaire (3) et du second dispositif cellulaire (4).

2. Appareil selon la revendication 1, dans lequel la détermination par le moyen de détermination est basée sur un premier rapport reçu du premier dispositif cellulaire (3) et sur un second rapport reçu du second dispositif cellulaire (4), différent du premier dispositif cellulaire (3), où le premier rapport concerne une première qualité d'une première liaison montante ou liaison descendante du premier dispositif cellulaire (3) vers le terminal (2) et le second rapport concerne une seconde qualité d'une seconde liaison montante ou liaison descendante du second dispositif cellulaire (4) vers le terminal (2).

3. Appareil selon la revendication 1, dans lequel le moyen de décision est adapté pour décider que le premier dispositif cellulaire (3) fournit la rétroaction si au moins une des conditions suivantes est satisfaite :
a) le premier dispositif cellulaire (3) est configuré en tant que cellule d'assistance et une différence d'une première qualité d'une première liaison montante ou liaison descendante du premier dispositif cellulaire (3) au terminal (4) et d'une seconde qualité d'une seconde liaison montante ou liaison descendante du second dispositif cellulaire (4) au terminal (2) est supérieure à un seuil de déséquilibre, et il y a une transmission de données du premier dispositif cellulaire (3) et du second dispositif cellulaire (4) au terminal (2) ;
b) le premier dispositif cellulaire (3) est configuré en tant que cellule d'assistance et une différence de la première qualité et de la seconde qualité est supérieure à un seuil de déséquilibre, et davantage de données doivent être envoyées au terminal (2) par le premier dispositif cellulaire que par le second dispositif cellulaire (4) ;
c) le premier dispositif cellulaire (3) est configuré en tant que cellule de service, et moins de données qu'un seuil de quantité de liaison descendante doivent être envoyées au terminal (2) par le second dispositif cellulaire (4), lequel est configuré en tant que cellule d'assistance ;
d) le premier dispositif cellulaire (3) est configuré en tant que cellule de service, et davantage de données qu'un seuil de quantité de liaison montante doivent être envoyées par le terminal (2) ;
e) le premier dispositif cellulaire (3) a subi moins de reconfigurations que le second dispositif cellulaire (4).

4. Appareil (3, 4) d'un réseau de radiocommunication utilisant une transmission à flux multiples en liaison descendante avec diversité de transmission en boucle fermée en liaison montante, comprenant :
un moyen de fourniture de rapport (210) adapté pour fournir (S210), à un dispositif de contrôle (1), un rapport sur la qualité d'une liaison montante ou d'une liaison descendante à un dispositif terminal (2), où le rapport est reçu sur une liaison montante ou conçu à partir de mesures sur une liaison montante depuis au moins deux antennes du dispositif terminal (2) ;
un moyen de décision (220) adapté pour décider (S220) si une détermination reçue du dispositif de contrôle (1) est négative, où la détermination concerne le fait que l'appareil (3, 4) doit fournir, ou non, une rétroaction au dispositif terminal (2) ;
un moyen de fourniture de rétroaction (230) adaptés pour fournir (S230), si la décision n'est pas négative, sur la liaison descendante, une rétroaction au dispositif terminal (2), où la rétroaction concerne une diversité de transmission d'au moins deux antennes du dispositif terminal (2) ;
un moyen d'interdiction (240) adapté pour interdire (S240) au moyen de fourniture de rétroaction de fournir la rétroaction si la décision reçue est négative.

5. Système de radiocommunication utilisant une transmission à flux multiples en liaison descendante avec diversité de transmission en boucle fermée en liaison montante, comprenant :
un appareil de contrôle (1) selon l'appareil de l'une quelconque des revendications 1 à 3 ;
un premier appareil cellulaire (3) selon l'appareil de la revendication 4 et un second appareil cellulaire (4) selon l'appareil de la revendication 4, où à la fois le dispositif de contrôle (1) du premier appareil cellulaire (3) et le dispositif de contrôle (1) du second appareil cellulaire (4) sont le même appareil de contrôle (1) ;
la détermination reçue par au moins un des premier et second appareils cellulaires (3, 4) comprend la détermination fournie par l'appareil de contrôle (1) ; et
la rétroaction reçue par le dispositif terminal (2) comprend la rétroaction fournie par au moins un des premier et second appareils cellulaires (3, 4).

6. Procédé pour un réseau de radiocommunication utilisant une transmission à flux multiples en liaison descendante avec diversité de transmission en boucle fermée en liaison montante, comprenant les étapes suivantes :
décider (S10) si l'un quelconque d'un premier dispositif cellulaire (3) et d'un second dispositif cellulaire (4) fournit une rétroaction pour une diversité de transmission en liaison montante d'au moins deux antennes d'un terminal (2),
déterminer (S20), s'il est décidé que la rétroaction doit être fournie, lequel parmi le premier dispositif cellulaire (3) ou le second dispositif cellulaire (4) fournit la rétroaction ;
fournir (S30) la détermination du fait que le premier dispositif cellulaire (3) ou le second dispositif cellulaire (4) fournit, ou non, la rétroaction à au moins l'un du premier dispositif cellulaire (3) et du second dispositif cellulaire (4).

7. Procédé selon la revendication 6, dans lequel la décision est adaptée pour décider que le premier dispositif cellulaire (3) fournit la rétroaction si au moins une des conditions suivantes est satisfaite :
a) le premier dispositif cellulaire (3) est configuré en tant que cellule d'assistance et une différence d'une première qualité d'une première liaison montante ou liaison descendante du premier dispositif cellulaire (3) au terminal (4) et d'une seconde qualité d'une seconde liaison montante ou liaison descendante du second dispositif cellulaire (4) au terminal (2) est supérieure à un seuil de déséquilibre, et il y a une transmission de données du premier dispositif cellulaire et du second dispositif cellulaire au terminal ;
b) le premier dispositif cellulaire (3) est configuré en tant que cellule d'assistance et une différence de la première qualité et de la seconde qualité est supérieure à un seuil de déséquilibre, et davantage de données doivent être envoyées au terminal (2) par le premier dispositif cellulaire (3) que par le second dispositif cellulaire (4) ;
c) le premier dispositif cellulaire (3) est configuré en tant que cellule de service, et moins de données qu'un seuil de quantité de liaison descendante doivent être envoyées au terminal (2) par le second dispositif cellulaire (4), lequel est configuré en tant que cellule d'assistance ;
d) le premier dispositif cellulaire (3) est configuré en tant que cellule de service, et davantage de données qu'un seuil de quantité de liaison montante doivent être envoyées par le terminal (2) ;
e) le premier dispositif cellulaire a subi moins de reconfigurations que le second dispositif cellulaire.

8. Procédé pour un réseau de radiocommunication utilisant une transmission à flux multiples en liaison descendante avec diversité de transmission en boucle fermée en liaison montante, comprenant les étapes suivantes :
fournir (S210), à un dispositif de contrôle (1), un rapport sur la qualité d'une liaison montante ou d'une liaison descendante à un dispositif terminal (2), où le rapport est reçu sur une liaison montante ou conçu à partir de mesures sur une liaison montante depuis au moins deux antennes du dispositif terminal (2) ;
décider (S220) si une détermination reçue du dispositif de contrôle (1) est négative, où la détermination concerne le fait que le récepteur de la détermination doit fournir, ou non, une rétroaction au dispositif terminal (2) ;
fournir (S230), si la décision n'est pas négative, sur la liaison descendante, une rétroaction au dispositif terminal (2), où la rétroaction concerne une diversité de transmission d'au moins deux antennes du dispositif terminal (2) ;
interdire (S240) de fournir la rétroaction si la décision reçue est négative.

9. Procédé selon la revendication 8, comprenant en outre les étapes suivantes :
fournir une indication d'un critère reçu du dispositif de contrôle (1) au dispositif terminal (2), où le critère doit être utilisé par le dispositif terminal (2) pour décider depuis quel dispositif cellulaire la rétroaction doit être reçue.

10. Produit programme informatique comprenant un ensemble d'instructions qui, lorsqu'il est exécuté sur un appareil, est configuré pour amener l'appareil à exécuter le procédé selon l'une quelconque des revendications 6 à 9.

11. Produit programme informatique selon la revendication 10, se présentant sous la forme d'un support lisible par ordinateur.
